**Europäisches Patentamt**

**European Patent Office**

**Office européen des brevets**

(19)

(11) Publication number: **0 100 793**

**B1**

(12)

# EUROPEAN PATENT SPECIFICATION

(45) Date of publication of patent specification: **15.10.86**

(51) Int. Cl.⁴: **C 08 F 2/44**

(21) Application number: **82200995.7**

(22) Date of filing: **06.08.82**

(54) **Aqueous dispersions comprising colloidal sized particles of a polymer and an additive and a method for their preparation.**

(43) Date of publication of application:
**22.02.84 Bulletin 84/08**

(45) Publication of the grant of the patent:
**15.10.86 Bulletin 86/42**

(84) Designated Contracting States:
**AT BE CH DE FR GB IT LI LU NL SE**

(56) References cited:
**EP-A-0 111 190**
**US-A-3 069 375**

(73) Proprietor: **THE DOW CHEMICAL COMPANY**
**2030 Dow Center Abbott Road P.O. Box 1967**
**Midland, MI 48640 (US)**

(72) Inventor: **Corbett, Peter James**
**Im Grün 11**
**D-7587 Rheinmünster (DE)**
Inventor: **Rance, Robert William**
**Mühlenstrasse 10c**
**D-7580 Bühl (DE)**

(74) Representative: **Urbanus, Henricus Maria, Ir.**
**et al**
**c/o Vereenigde Octrooibureaux Nieuwe**
**Parklaan 107**
**NL-2587 BP 's-Gravenhage (NL)**

Courier Press, Leamington Spa, England.

**0 100 793**

**Description**

The present invention relates to an aqueous, polymer, dispersion and a method for the preparation of an aqueous dispersion, particularly to a method for preparing an aqueous polymer dispersion comprising colloidal size polymer particles and a dispersible, water-insoluble additive and to an aqueous dispersion comprising colloidal size polymer particles and colloidal size particles comprising a water-insoluble antioxidant.

Aqueous dispersions of colloidal size, polymer particles have a variety of commercial applications such as coatings, e.g., paints or films, adhesives, and the like. Conventionally, the aqueous polymer dispersions are prepared by admixing an emulsion polymerizable monomer, a surfactant and a water soluble polymerization initiator in water and subsequently subjecting the admixture to conditions sufficient to polymerize the monomer, thereby forming an aqueous dispersion of the resulting polymer particles (often, such dispersions are referred to as latexes). To facilitate the formation of polymer particles having a uniform size, often, the surfactant is added initially and then in increments during the polymerization. Alternatively, a polymerization seed i.e. small particles of generally less than about 800 Å, which serve as a loci for subsequent polymerization is employed.

In general, the resulting latex, as prepared, does not exhibit the required properties for subsequent end use application and one or more additive materials are post-added to the latex to impart desirable properties thereto.

For example, for oxidation sensitive polymers, an antioxidant is commonly added to the latex to improve the latex's heat and oxygen stability. Other common additives post-added to a latex include plasticizers, pigments, coalescents, flame retardants, and the like. Since many of these additives are not soluble in water, to uniformly disperse the additive throughout the latex, prior to its addition to the latex, it is generally prepared as a dispersion in water using mechanical means. Unfortunately, the mechanical means required to form an aqueous dispersion of small particles of the additive are generally energy and capital intensive. Moreover, the additive particles formed by mechanical dispersion are relatively large (e.g., 4 μ or larger) and do not form a stable dispersion. Therefore, upon storage, the additive particles tend to separate, i.e., settle or cream, from the remainder of the latex, thereby causing handling problems and resulting in a non-uniform dispersion.

Methods for incorporating an additive in a latex other than by post-addition have been proposed. For example, U.S. Patent 2,700,026 discloses the preparation of a latex having a plasticizer incorporated therein by dispersing a monomer-plasticizer solution in an aqueous medium to form an oil-in-water emulsion and subsequently polymerizing the monomer. Similarly, U.S. Patent 3,228,830 discloses a method for incorporating a biocidally active, organic derivative of 10-phenoxarsine in a latex. The method comprises forming a solution of a polymerizable monomer and the active organic derivative, subsequently dispersing the monomer/derivative solution in an aqueous liquid containing the necessary polymerization aids and then polymerizing the monomer. Unfortunately, the dispersed oil/monomer droplets are of an undesirably large size (e.g., from 0.5 to 1.5 microns) which often deleteriously affects the properties and the stability of the resulting product.

Another method for preparing a latex having dispersed particles of an additive distributed therethrough is disclosed in U.S. Patent 3,316,199. In said method, a heated solution (e.g., 50—85°C) of a polymerizable monomer, a poly (α-olefin) plasticizer and, optionally, a surfactant, is dispersed in a heated, aqueous solution of an emulsifier. The resulting dispersion is then subjected to a high shear mixer, subsequently added to an aqueous solution containing a catalyst and polymerization subsequently conducted. Unfortunately, the disclosed method requires a variety of pre-heating steps and an energy intensive, mechanical homogenization.

An alternative method for preparing a latex is disclosed in British Patent Specification 1527,312 of J. Ugelstad. In said method, an aqueous mixture containing an emulsifier (surfactant) and water-insoluble solvent for the monomers to be polymerized is homogenized. The monomer to be polymerized and a water-soluble polymerization initiator are added to the resulting homogenized mixture and polymerization subsequently conducted. In said method, the water-insoluble solvent imbibes the polymerizable monomer and serves as the site for polymerization. In such manner, the solvent, which solvent can be a comonomer or an additive (various plasticizers and an epoxy stabilizer for vinyl chloride polymers being specifically disclosed) becomes an integral part of the final latex. Unfortunately, the described process still requires an energy intensive, mechanical homogenization or dispersion step. Moreover, without using sophisticated and expensive equipment, the resulting latex particles are generally relatively large particles which often results in a decrease in the stability and a change in the properties in the products, e.g., films, prepared therefrom.

In view of the aforementioned deficiencies, it remains highly desirable to prepare a latex having an additive dispersed therethrough, which additive is not susceptible to sedimentation or creaming, without the need for a mechanical dispersion operation.

Accordingly, in one aspect the present invention is a method for the preparation of a polymer composition comprising an aqueous dispersion of colloidal size polymer particles and an additive. Said method comprises the step of polymerizing an emulsion polymerizable monomer in an aqueous polymerization medium, said polymerization being conducted such that at least a portion of the

2

polymerization occurs in the presence of a water-insoluble additive, said water-insoluble additive having been added to an aqueous liquid which forms all or part of the aqueous polymerization medium as an inherently dispersible solution of the additive and a surfactant.

By the term "inherently dispersible" is meant that the additive/surfactant solution can be dispersed in water as colloidal size particles having a size of less than 1000 A without requiring significant agitation, i.e., a drop of the solution, when deposited on the surface of water contained by a beaker or other suitable container, becomes dispersed, without agitation, as colloidal size particles. Therefore, by properly selecting the type and amount of surfactant, the additive can be readily dispersed using ordinary mixing, i.e., a separate homogenization step is not required to form particles of a relatively small size, i.e., less than 1000 A.

In another aspect, the additive comprises a water-insoluble antioxidant and the present invention is a stable polymer composition comprising an aqueous dispersion of (a) colloidal size polymer particles and (b) additive particles comprising a water-insoluble antioxidant, said additive particles being separate and distinct from the polymer particles with a particle size of less than 1000 A and being stable against sedimentation and creaming.

Surprisingly, emulsion polymerizable monomers can unexpectedly be polymerized in the presence of the small size disperse additive particles to form a synthetic polymer emulsion (latex) having a polymer particle of a desirably small size (e.g., from 1000—4000 A) without the presence of the additive significantly and adversely affecting the polymerization reaction.

In the resulting emulsion, the additive can be (1) uniformly distributed throughout the resulting polymer latex as separate and distinct, stable particles dispersed throughout the aqueous phase, (2) as an integral part of the resulting polymer particles or (3) as a combination thereof (i.e., a portion existing as separate and distinct particles and a portion existing as an integral part of the polymer particles), thereby imparting the desired properties to the latex and/or products prepared therefrom.

For example, a latex comprising an antioxidant can be prepared with the antioxidant being uniformly dispersed throughout the aqueous phase of the resulting emulsion as separate and distinct particles of an average particle size of less than 1000 Å. Alternatively, additives such as organic pigments or dyes become an integral part of the polymer particles of the resulting latex.

The resulting polymer compositions are unexpectedly stable when compared to a latex composition in which the additive has been mechanically homogenized and post-added thereto. In addition, since the additive is uniformly distributed through the polymer composition, the polymer composition exhibits desirable properties.

The monomers employed in the practice of the present invention are generally those monomers capable of being polymerized using emulsion polymerization techniques. Such monomers are well known in the art and reference is made thereto for the purposes of this invention. Merely for the purposes of illustration, reference is made to Polymer Processes, edited by Calvin E. Schildknecht, published in 1956 by Interscience Publishers, Incorporated, New York, Chapter IV, "Polymerization in Emulsions" by H. Leverne Williams. In Table II on pages 122—133 of Schildknecht are listed diverse kinds of monomers which can be emulsions polymerized alone (homopolymers) or in mixtures (copolymers) to form aqueous dispersions of colloidal sized, polymer particles (said dispersions commonly being referred to as latexes) which dispersions can be employed in the practice of this invention. Representative polymers useful herein include those derived from the monovinylidene aromatics such as styrene, α-methyl styrene and the like; esters of α,β-ethylenically unsaturated esters of a carboxylic acid such as ethylacrylate and methyl methacrylate; alkadienes such as 1,3-conjugated diene, e.g., butadiene or isoprene; vinyl esters of an unsaturated carboxylic acid such as vinyl acetate and mixtures of one or more such monomers. Also of interest are polymers derived from one or more emulsion polymerizable monomers with a monomer which is not normally homopolymerizable using emulsion polymerization techniques such as an α,β-ethylenically unsaturated carboxylic acid, e.g., acrylic acid; or an unsaturated nitrile, e.g., acrylonitrile. Of particular interest herein are the polymers derived from the monovinylidene aromatics, particularly styrene; the esters of an unsaturated carboxylic acid, particularly ethylacrylate and methylmethacrylate; and the alkadienes, particularly, 1,3 butadiene, with copolymers of these monomers, particularly copolymers of a monovinylidene, preferably styrene, and an alkadiene, preferably 1,3 butadiene, being most preferred.

The additives suitably employed in the practice of the present invention are water-insoluble, but water dispersible materials. By the term "water-insoluble" it is meant, that, at the concentrations employed, at least a portion of the additive does not form a true solution in water, i.e., individual molecules of the additive are not dispersed throughout the water. Preferably, essentially none of the additives is soluble in water, with said additive having a water solubility of less than 0.1 gram (g) per liter (l) of water at 25°C, more preferably a water solubility of less than 0.05 g/l water at 25°C. The term "water dispersible" means that the additive is capable of being dispersed in an aqueous liquid as colloidal size particles and is meant to include those materials which require the use of a dispersing aid, e.g., surfactant, to form such dispersion, as well as those materials which can be dispersed in water or other aqueous liquid without the need for a dispersing aid. The aqueous liquid can be water (including alkaline or acid aqueous solutions or aqueous salt solutions) or a solution of water and a water miscible liquid, preferably a polar liquid such as a lower alkanol, e.g., methanol, ethanol or propanol, a lower ketone, e.g., acetone or methyl ethyl ketone; an ether such as diethyl ether; and the like.

Dispersible, water-insoluble additives commonly added to a latex or other polymeric compositions, usually at low concentrations, to preform a specific function or alter the properties of the latex and/or product prepared therefrom, are often advantageously employed herein. Representative of such materials are antioxidants. As used herein, the term "antioxidant" refers generally to a material which is capable of retarding the degradation of a polymer due to its reaction with oxygen such as by the reaction with the peroxy radicals formed by the reaction of the polymer with oxygen to form a stable (i.e., unreactive) moiety as well as to a material which is capable of measurably reducing the rate of polymerization or terminating polymer chain growth. Representative antioxidants include substituted phenols such as styrenated phenol, halo-substituted phenols and bisphenols, the alkyl substituted phenols and bisphenols including the alkylated *p*-cresols such as 2,6 di-*tert* butyl-*p* cresol, alkylated styrenated phenol, 6-*tert* butyl 2,4-dimethyl phenol, 4,4-butylidene-bis (6-*tert* butyl-*m*-cresol), aryl substituted phenols, blends of the alkyl and aryl substituted phenols and the like; nitrogen containing phenolic derivatives and aryl amines such as N,N - dicyclohexyl-*p*-phenylenediamine, 4,4-diaminodiphenyl methane, alkyl-aryl-*p*-phenylenediamines and the like; quinones such as 2,5-di-*tert*-butylquinol, thiourea; tributyl thiourea and the like. Mixtures of two or more antioxidants can also advantageously be employed. Generally preferred antioxidants include the water-insoluble substituted phenols and bisphenols, including blends of the alkyl and aryl-substituted phenols, more particularly the alkylated-*p*-cresols; and the aryl amines, with the alkylated-*p*-cresols being the most preferred antioxidant employed herein. Other additives include pigments, dyes or colorants such as anthraquinone, azo and xanthane dyes and organic pigments such as diazo pigments and quinocridone; fungicides such as chlorinated and nitrated benzenes and synthetic fungicides such as oxathine and pyrimidines; plasticizers such as dioctyl phthalate; coalescing aids, UV absorbers and the like. In addition, other dispersible, water-insoluble materials not normally incorporated within a polymer latex composition such as pesticides, e.g., cypermethrin; pharmaceutics and the like can also be employed as the dispersed water-insoluble additive.

The additive employed in the practice of the present invention is dependent on a variety of factors; particularly, the desired properties of the final polymer composition and/or the products prepared therefrom. Specifically, if antioxidant properties are desired, an antioxidant is employed. Alternatively, the polymer composition can be prepared using two or more additives. For example, both an antioxidant and dye are employed to prepare a tinted latex exhibiting antioxidant properties. In general, the method of the present invention is particularly advantageous in preparing a polymer composition having an antioxidant, particularly an alkylated-*p*-cresol or a pigment, dye or color incorporated herein.

The additives are employed in an effective amount, i.e., an amount sufficient to impart the desired properties to the finished latex. Such concentrations will vary depending on a variety of factors including the specific additive employed and the desired properties of the polymeric composition and/or products prepared therefrom and is readily determined by a skilled artisan. In general, the additive will advantageously be employed in amounts varying from 0.01 to 20, preferably 0.1 to 5, weight percent based on the total weight of the polymer.

In the practice of the present invention, the additive is admixed with a surfactant to form an inherently dispersible solution. If more than one additive is employed (e.g., an antioxidant and a pigment) the two additives and the surfactant are admixed, if possible, to form one inherently dispersible solution or, alternatively, an inherently dispersible, additive/surfactant solution is prepared from each additive. The term surfactant is used conventionally herein and is intended to mean any surface active agent which reduces surface tension when dissolved in water or an aqueous solution or which reduces interfacial tension between two liquids or between a liquid and a solid. Included within said terms are those compounds conventionally called detergents, wetting agents and emulsifiers. Illustrative examples of such surfactants are those presented in McCutcheon's "Detergents and Emulsifiers" edited by J. W. McCutcheon, published in 1976 by John W. McCutcheon, Inc., Morristown, N.J.

The surfactants most advantageously employed in preparing the additive dispersions are dependent on a variety of factors including the specific additive employed and the method by which the polymeric latex is to be prepared, particularly the surfactant employed in the preparation of the latex. Specifically, the surfactant used in the preparation of the additive dispersion is necessarily compatible with the surfactant and other polymerization aids employed in the latex polymerization. Although any anionic, cationic, nonionic or amphoteric surfactant or compatible mixtures thereof can be employed, in general, anionic or nonionic surfactants are employed, with the preferred surfactants or surfactant combinations employed in the preparation of the additive dispersion containing a nonionic surfactant.

Representative nonionic surfactants include the reaction product of an alkylene oxide particularly ethylene oxide or a combination of ethylene oxide and propylene oxide with alkylated phenols or long chain, e.g., about 6 to about 20 carbon atoms, fatty alcohols, fatty acids, alkyl mercaptans and primary amines; monoesters, e.g., the reaction product of polyethylene glycol with a long chain carboxylic acid with polyglycol ethers of polyhydric alcohol. Preferred nonionic surfactants possess an HLB value of at least 5 and less than 25, more preferably less than 20. Surfactant combinations of one or more nonionic surfactant or one or more nonionic surfactant with one or more anionic surfactant such as calcium dodecyl benzene sulfonate can also preferably be employed.

4

The surfactant/additive solution is prepared using amounts of surfactant and additive such that the additive can be dispersed in water, without significant agitation, as a dispersion of colloidal size particles having a particle size of less than 1000 Å. As used therein, the particle size is the number average particle size as determined by microscopic techniques, e.g., wet cell techniques using a transmission electron microscope at a magnification of at least 50,000×. Since such methods are often inconclusive and time consuming, for the purposes of this invention, the dispersed additive particles are presumed to have a number average particle size of less than 1000 A when essentially all, i.e,. at least about 90 weight percent of the additive, can be separated from an aqueous dispersion containing same using conventional serum replacement techniques such as exemplified in Example I using a filter pore size of 1000 A.

Although the amounts of surfactant and additive will generally vary depending primarily on the specific additive and surfactant employed, in general, the surfactant/additive solution will contain from 40 to 99, preferably from 45 to 90, weight percent of surfactant and from 1 to 60, preferably from 10 to 55 weight percent of additive, said weight percents being based on the total weight of the surfactant and additive.

In one embodiment for preparing the polymer composition, an aqueous dispersion of the colloidal size, particles comprising the additive or additives is employed as the aqueous polymerization medium. In said method, the aqueous dispersion of the additive particles will contain the polymerization aids necessary to conduct the emulsion polymerization. The monomers to be polymerized are subsequently added using batchwise, incremental (i.e., added as two or more shots during the polymerization process) or continuous addition, to the polymerization medium and polymerization subsequently conducted. In a second embodiment, but less preferably, the additive is added coincident with, but separate from, or subsequent to the addition of the monomers to be polymerized but prior to complete polymerization to an aqueous polymerization medium containing the necessary polymerization aids.

In still another embodiment, a portion of the additive is dispersed in the polymerization medium prior to the monomer and a portion thereof added coincident with, but separate from, the monomer using batchwise, incremental or continuous addition, with continuous addition beginning subsequent to initial polymerization being preferred. Addition of the additive is then stopped previous to complete polymerization of the monomer. During the addition of the monomers and the additive, the polymerization reaction medium is advantageously maintained as an essentially uniform mixture, typically, by mild agitation. If more than one additive is employed, all or any number of the additives can be dispersed in the aqueous polymerization medium coincident with the monomers. Specifically, one or more additive can be in the aqueous polymerization mixture prior to the addition of the monomer thereto with one or more other additive being added to the polymerization medium coincident with the monomers.

The polymerization of the polymerizable monomers is conducted at conditions sufficient to polymerize the monomers and form a stable polymer dispersion. The stability of the polymeric dispersion is determined by subjecting the polymeric dispersion, as a 10 weight percent, solids level to extended storage in a closed container, without agitation, and periodically examining the container for a distinct bottom or top layer.

Although the stability of the dispersion will vary depending upon the additive and its particle size, in general, the dispersion is presumed to be stable if no significant sedimentation or creaming is observed after the dispersion has been stored for a two week period. In many instances, no significant sedimentation or creaming in the dispersion of this invention is observed after storage periods of up to one month, preferably two months or more. By way of comparison, significant separation is often exhibited by a polymeric dispersion within the first week of storage and generally within two weeks or less, when the polymeric dispersion is prepared by post-adding an aqueous dispersion of the additive prepared using conventional mechanical homogenization techniques which result in particles having a size of 3000 Å or more.

During said polymerization, if the additive is an antioxidant material the additive will generally remain as separate and distinct particles dispersed throughout the aqueous medium of the polymeric composition. Such separate and distinct particles are evidenced by (1) the observance of distinct particles separate from the polymer latex particles (except for a possible surface attraction between the additive and the latex polymer particles) under magnification of at least 50,000× using wet cell type techniques or (2) the ability to separate the additive particles from the latex particles using serum replacement techniques such as described in Example 1. Alternatively, using other additives such as inorganic soluble pigments, dyes or plasticizers, the additive is generally soluble with the monomers and/or resulting polymer and becomes an integral portion of the particle comprising the resulting polymer. However, additive particles formed upon dispersing the additive surfactant solution are relatively small, (i.e., less than 1000 A, preferably less than 700 Å) polymer particles of a desirable small size, e.g., from 1500 to 3000 A are easily prepared.

In general, the polymerization is conducted in the presence of polymerization aids conventionally employed heretofore in the emulsion polymerization preparation of polymers provided they are compatible with the additive and the surfactant used in preparing the additive/surfactant solution. Such polymerization aids are well known in the art and include emulsifiers (in addition to any surfactant employed in preparing the aqueous dispersion) and polymerization initiators. Preferred polymerization initiators include the conventional chemical initiators useful as free radical generators such as the azo compounds, e.g., azobisisobutyronitrile; bisulfites; persulfates; peroxygen compounds, e.g., propyl

0 100 793

percarbonate and benzoyl peroxide; and the like. The initiators are employed in an effective amount, i.e., an amount sufficient to cause polymerization. This effective amount is dependent primarily on the monomers being polymerized but generally varies from 0.05 to 5, preferably from 0.1 to 3, weight percent, said weight percent being based on the total weight of the polymerizable monomer employed.

The emulsifiers employed in preparing the latex polymer particles are advantageously compatible, emulsifiers (including anionic, nonionic, cationic or amphoteric surfactants or mixtures thereof) employed heretofore in emulsion polymerization processes. An anionic surfactant or mixtures of one or more nonionic surfactant with an anionic surfactant are often preferably employed. Representative anionic surfactants includes sodium lauryl sulfate, sodium dioctyl sulfo succinate, dephenyl oxide sulfonate, and the like. A representative cationic surfactant is hexadecyl trimethyl ammonium bromide and representative nonionic surfactants include the alkoxylated phenols as described hereinbefore. The amount of surfactant most advantageously employed is dependent on a variety of factors and easily determined by one skilled in the art. In general, from 0.1 to 5, preferably from 0.2 to 3 weight percent, of the emulsifiers are employed (this is in addition to any surfactant employed in preparing the aqueous additive dispersion) based on the weight of the polymerizable monomer.

Optionally, other polymerization aids such as chain transfer agents, chelating agents, acids, bases or salts to provide a described pH or possibly buffered system and the like may also be employed.

Depending typically on the polymerization techniques employed, any or all the additives, including any portion thereof can be added to the polymerization medium prior to the polymerizable monomers or coincident therewith and the techniques most advantageously employed are easily determined by a person skilled in the art.

The polymerization is conducted using temperatures sufficiently high to initiate and continue polymerization of the monomer or monomers being polymerized but less than that temperature which causes destabilization of the additive dispersion or at which the polymer decomposition exceeds the polymer formation rate. In general, the polymerization temperature will vary from 50 to 120°C. At these temperatures, polymerization usually requires from 3 to 10 hours. Following completion of polymerization, the resulting polymer composition is a stable, uniform aqueous dispersion of polymer particles and additive particles. The compositions can be employed as prepared or be subsequently mixed with various adjuncts such as plasticizers, fillers such as fibers, coalescing agents, reactive resins, and the like.

Adjuncts conventionally employed and their effects are well known in the art and reference is made thereto for the purposes of the present invention.

The following examples are set forth to illustrate the invention and should not be employed to limit its scope. In the examples, all parts and percentages are by weight unless otherwise specified.

Example 1

An additive surfactant/solution is prepared by admixing (1) 10 parts of an antioxidant blend comprising (a) 1.4 parts of a partially hindered phenol sold as Wingstay L by Goodyear Tire and Rubber Co. and (b) 8.6 parts of ditridecylthiodipropionate (DTDTDP) and (2) 20 parts of a surfactant blend comprising (a) 13.3 parts of a blend comprising the calcium salt of alkyl benzene sulfonic acid, a (p-nonylphenol hydroxy poly (oxyethylene)) and a block polymer of propylene and ethylene oxide sold as Tensiofix 7416 by Tensia Co. and (b) 6.7 parts of octylphenol polyethoxyethanol sold as Triton X 165 by Rohm and Haas.

To a suitably sized flask equipped with an agitator, heating and cooling means, thermometer and addition funnels is added 655 parts of water, 30 parts of the additive/surfactant solution, 0.1 parts of a chelating agent, 2.2 parts of a diphenyl oxide sulfonate surfactant sold as Dowfax 2A1 by The Dow Chemical Company, 30 parts of a chain transfer agent and 20 parts of an unsaturated carboxylic acid. A monomer feed comprising 480 parts of styrene, 500 parts of 1,3-butadiene and 80 parts of a chain transfer agent is continuously added to the flask over a 4.25 hour period. Simultaneous with said addition, an aqueous feed comprising 335 parts water, 0.1 parts of a chelating agent, 33.8 parts of Dowfax 2A1 and 1.1 parts of sodium hydroxide is continuously added to the flask. Following the addition of both streams, a mixture of 17.2 parts of deionized water and 0.7 parts of a persulfate free-radical initiator is added as a shot to the flask. During the addition of the aqueous and monomer feeds and for an additional 2 hour period, the contents of the flask are continuously agitated and maintained at a temperature of 90°C. At the end of this period, the polymerization is essentially complete and the flask cooled to ambient temperatures, i.e., a temperature from 18—25°C.

The resulting dispersion is subjected to a steam distillation operation to remove any residual unpolymerized monomers and the pH of the aqueous dispersion adjusted to 9. Upon analysis resulting dispersion is found to be 45.5 percent solids and the dispersed polymer particles contained therein to have a number average particle size of 1,430 Å as determined by conventional light scattering techniques. The composition is designated in Sample No. 1.

To ascertain whether the antioxidant particles remained separate and distinct during the polymerization process, a 10 part portion of the resulting dispersion is admixed with 90 parts of distilled water. The diluted dispersion is subsequently placed in a serum exchange cell of 400 millimeters (ml) capacity. The cell comprises a cylindrical polycarbonate reservoir held between two polyacetal plates. The cell is fitted with a Nuclepore membrane filter with 1000 Å diameter holes. The filtration membrane is supported on the bottom of the cell. A Teflon coated stirring bar rotates close to the membrane surface to.

6

prevent clogging of the pores by the polymer particles and to assure a steady flow rate over long periods of time. A total of 10 exchange volumes of distilled water are passed continuously through the membrane over a 48 hour period. Samples of the dilute dispersion are subjected to differential thermal analyses prior to, during and subsequent to the serum exchange procedure. Finally, waste material, collected on the membrane is also subjected to differential thermal analysis. The initial dilute dispersion shows a retention time as measured by the differential thermal analysis techniques of 41 minutes. After 900 ml of distilled water have passed through the cell, the dilute dispersion exhibits a retention time of about 30 minutes. After 1500 ml of distilled water have passed through the cell, the dilute dispersion shows a retention time of only 8 minutes with degradation beginning immediately. After 4000 ml of distilled water have passed through the cell, the retention time is only 4 minutes with degradation also beginning immediately. Essentially no latex particles are found to pass through the filter. As evidenced by the fact that the antioxidant protection is slowly being diminished, with essentially no protection being detected after 10 exchange volumes (4000 ml), the antioxidant and any other additives which provide antioxidant protection are clearly being progressively removed from the dispersion during serum replacement. Therefore, the antioxidant is shown to exist as separate and distinct colloidal sized particles having a particle size of less than 1000 A.

In a similar manner, a second polymer composition (Sample No. 2) is prepared except that the antioxidant/surfactant solution consists of 10 parts of an antioxidant blend comprising 1.4 parts of the partially hindered phenol and 8.6 parts of the ditridecylthiodipropionate and 20 parts of a nonylphenol ethoxylate sold as Dowfax 9N10 by The Dow Chemical Company.

Comparative Example:

For purposes of comparison, an aqueous dispersion of a polymer which dispersion contains no antioxidant particles is prepared using the same monomeric constituents as employed in the preparation of Samples Nos. 1 and 2 and employing conventional emulsion polymerization techniques. An aqueous dispersion of 10 parts of an antioxidant blend comprising 1.4 parts of the hindered phenol and 8.6 parts of DTDTDP is prepared by mechanically homogenizing the antioxidant blend in 7.4 parts water containing 0.7 parts of a sodium lauryl sulfate surfactant. The resulting dispersion comprises antioxidant particles having a number average particle size of about 4000 Å. A 3.2 part portion of this mechanically homogenized dispersion is added to a 100 part portion of the polymer dispersion to form a conventional, antioxidant containing, polymer dispersion. (Sample No. C).

Each of the resulting polymer compositions are evaluated for stability, i.e., creaming or sedimentation of the antioxidant particles, antioxidant protection, dry and wet tensile strains, elongation, swelling index and heat ceiling properties. The results of this testing are set forth in Table I.

TABLE I

| Sample No. | Antioxidant particle size, A | Stability, weeks[1] | Antioxidant properties, min[2] | Tensile properties[3] | | | | Heat aging[4] |
| | | | | Dry | | Wet | | |
| | | | | Strength kg/cm | Elong. % | Strength, kg/cm | Elong. % | |
|---|---|---|---|---|---|---|---|---|
| C* | 20000 | 1 | 21 | 3.80 | 18.9 | 1.90 | 36.0 | Yellowness |
| 1 | 1000 | 8 | 55 | 3.73 | 19.7 | 1.89 | 36.7 | Slt. yellowness |
| 2 | 1000 | 8 | 45 | 3.78 | 20.0 | 1.92 | 36.9 | Slt. yellowness |

* Not an example of the present invention.

[1] Stability is the stability of the disperse antioxidant in the polymer composition against creaming or sedimentation to form a visibly distinct top or bottom phase. It is determined by diluting the polymer composition to 20 percent solids by the addition of deionized water and observing the composition once per day to determine if a visible top or bottom layer has formed, with the time at which such top or bottom phase first being noticed indicated.

[2] The antioxidant properties of the polymer composition are measured by preparing a film from the composition and subjecting the film to a differential thermal analysis treatment. The film is prepared by coating the composition film using a 650 ml draw down bar. The films are dried at 60°C until clear and then for 10 minutes at 135°C. A sample of the film is loaded into a Mettler TA2000 DTA apparatus and the temperature difference between the film and reference cell measured. The time recorded is the time required to reach to peak exotherm.

[3] The polymer composition is diluted to 24 weight percent solids. A Whatman No. 4 filter is impregnated with the dilute composition using a Werner Mathis roller impregnator with a linear pressure of 30 kg on the nip rolls. The impregnated paper is dried for 5 minutes at 135°C and the dried paper subsequently conditioned for 24 hours at a relative humidity of 50 percent and 20°C. The dry tensile properties of the paper are then determined on a dumbbell shaped specimen (width 1.3 cm) as shown in Picture 1 of ASTM 53571 using an Instron Tensimeter at a cross-head speed of 50 mm/min. The wet tensile properties are measured after the dumbbell shaped specimen has been immersed in tap water at ambient temperature for 30 minutes.

[4] Heat aging is the resistance of a polyester sheet having a pick-up of about 55 weight percent of the polymer composition after its dilution to 18 percent solids to yellowing.

**0 100 793**

As evidenced by the data recorded in Table I, the polymeric compositions of the present invention wherein the polymer is prepared in the presence of an aqueous polymerization medium containing disperse antioxidant particles having a size of less than 1000 Å, exhibit surprisingly better stability and antioxidant properties than a polymer composition wherein the antioxidant is dispersed by mechanical homogenization techniques and subsequently added to the finished polymer latex composition. In addition, the other latex properties are essentially equivalent.

Example No. 2

In a manner similar to the preparation of Sample No. 1, various polymer compositions are prepared in the presence of an aqueous dispersion of colloidal sized antioxidant particles, said aqueous dispersion being prepared using the various antioxidant/surfactant solutions set forth in Table II. The surfactants used in conducting the emulsion polymerization, as well as the percent solids and the polymer particle size of the resulting polymer composition are also presented in Table II.

9

TABLE II

| Sample No. | Antioxidant surfactant solution | | | | Polymer latex composition | | | |
|---|---|---|---|---|---|---|---|---|
| | Antioxidant[1] | | Surfactant[2] | | Surfactant[3] | | | Polymer particle size |
| | Type | Amount | Type | Amount | Type | Amount | % Solids | |
| 3 | WL/DTDTDP | 0.16/0.84 | 7416/X165 | 0.66/0.33 | 2A1 | 1.62 | 44.2 | 1400 |
| 4 | WL/DTDTDP | 0.24/1.26 | 7416/X165 | 0.66/0.33 | 2A1 | 1.62 | 44.8 | 1400 |
| 5 | WL/DTDTDP | 0.24/1.26 | 7416/X165 | 1/0.5 | 2A1 | 1.62 | 44.9 | 1430 |
| 6 | WL/DTDTDP | 0.16/0.84 | 7416/X165 | 0.5/0.5 | 2A1 | 1.62 | 43.1 | 1430 |
| 7 | WL/DTDTDP | 0.16/0.84 | 7416/X165 | 1/1 | 2A1 | 1.62 | 44.8 | 1450 |
| 8 | WL/DTDTDP | 0.16/0.84 | 7416/X165 | 0.66/0.33 | 2A1 | 1.52 | 46.1 | 1520 |

[1] The antioxidant is presented in abbreviated form with WL=a hindered phenol sold as Wingstay L by the Goodyear Tire and Rubber Company and DTDTDP=ditridecylthiodipropionate. The amount of antioxidant is given as the weight parts employed per 100 weight parts of monomer employed.

[2] The surfactant of the antioxidant/surfactant solution is presented in abbreviated form with 7416=Tensiofix 7416 and X165=Triton X165. The amount is given as the weight parts employed per 100 weight parts of monomer employed.

[3] The surfactant added to the aqueous emulsion polymerization medium is given in abbreviated form with 2A1=a diphenyl oxide sulfonate sold as Dowfax 2A1 by The Dow Chemical Company. The amount is weight parts per 100 weight parts of monomer employed, with approximately 90 weight percent of the surfactant being added initially to the polymerization medium and 10 percent coincident with the monomer, except in Sample No. 8, all the surfactant is added to the polymerization medium prior to the addition of the monomers thereto.

As evidenced by the data presented in Table II, the polymerization is not significantly effected by the designated variations in the antioxidant surfactant blend. On further testing of the resulting polymer compositions, all polymer compositions exhibit exceptional stability and antioxidant properties when compared to a polymer composition having an aqueous dispersion of the antioxidant added thereto which aqueous dispersion has been prepared by the mechanical homogenization of the antioxidant in an aqueous liquid. In addition, upon subsequently testing each of the compositions using serum replacement techniques, the dispersed antioxidant particles are found to be separate and distinct from the polymer particles and to have a particle size of less than 1000 Å.

Example 3

An additive/surfactant solution is prepared by admixing 10 parts of an organic soluble pigment sold as Automate Green by Williams and 10 parts of a surfactant blend of 5 parts Tensiofix 7416 and 5 parts of Triton X-165. The additive/surfactant solution is admixed with 655 parts water, 0.1 parts of a chelating agent, 2.2 parts of an emulsifier, 20 parts of an unsaturated carboxylic acid and 30 parts of a chain transfer agent. A monomer feed comprising 480 parts of styrene, 500 parts of 1,3-butadiene and 80 parts of a chain transfer agent is continuously added to the flask over a 4.25 hour period. Simultaneous with said addition, an aqueous feed comprising 333 parts water, 0.1 parts of sodium hydroxide and 5.6 parts of a free-radical initiator is continuously added to the flask. Following the addition of both streams, a mixture of 17.2 parts of deionized water and 0.7 parts of a persulfate free-radical initiator is added as a shot to the flask. During the 2 hour period, the contents of the flask are continuously agitated and maintained at a temperature of 90°C. At the end of this period, the polymerization is essentially complete and the flask cooled to ambient temperatures, i.e., a temperature from 18—25°C.

The resulting dispersion is subjected to a steam distillation operation to remove any residual unpolymerized monomers and the pH of the aqueous dispersion adjusted to 9. Upon analysis resulting dispersion is found to be 42.9 percent solids and the dispersed polymer particles contained therein have a desirable number average particle size of only 1680 Å as determined by conventional light scattering techniques.

The resulting polymer dispersion possesses a uniform light blue color when applied as a film or coating such as to a paper surface or surface of a wood veneer and subsequently dried, the dispersion imparts a green color paper or wood surface.

Upon subjecting a portion thereof to a serum replacement technique such as described in Example 1, the pigment is found to comprise an integral part of the disperse particles comprising the polymer due to the fact that there is no separation of the pigment from the polymer particles.

A second portion of the resulting polymer dispersion is diluted to 10 percent solids and stored in a closed container at ambient temperatures. No creaming or sedimentation is found after storage for 2 months.

Using the method of this Example, a stable pigmented latex having suitably small size polymer particles is readily prepared without the necessity of post-adding the pigment.

Example 4

In a manner similar to Example 3 except that the additive/surfactant solution comprises 10 parts of diisooctyl phthalate plasticizer and 10 parts of a polyoxyethylene sorbitan monolaurate, a stable, polymer dispersion is prepared. The resulting dispersion has 47.4 weight percent solids and a particle size of 1200 Å. When a portion of the dispersion is diluted to 10 percent solids essentially no settling or creaming is detected after storage of two months.

Example 5

In a manner similar to Example 3 except that the additive/surfactant solution comprises 10 parts of cypermethrin, a pesticide and 10 parts of a surfactant blend of 5 parts Tensiofix 7416 and 5 parts Triton X-165, a stable polymer dispersion is prepared. The resulting dispersion possesses 45,8 weight percent solids and the disperse, polymer-containing particles are found to have a particle size of 1630 A. Upon testing using serum replacement techniques, the pesticide is found to be an integral part of the disperse, polymer-containing, particles. When a portion of the dispersion is diluted to 10 percent solids, essentially no settling or creaming is detected after storage of two months.

**Claims**

1. A method for preparing a polymer composition comprising an aqueous dispersion of colloidal size polymer particles and an additive wherein an emulsion polymerizable monomer is polymerized in an aqueous polymerization medium and the polymerization is conducted such that at least a portion of the polymerization occurs in the presence of a water-insoluble additive, the polymerization method being characterized by the fact that the water-insoluble additive is dispersed in an aqueous liquid which forms all or part of the aqueous polymerization medium as an inherently dispersible solution of the additive and surfactant.

2. The method of Claim 1 characterized in that the solution of the additive and the surfactant comprises from 40 to 99 weight percent surfactant and 1 to 60 weight percent of additive, said weight percents being based on the total weight of the additive and surfactant.

3. The method of Claim 2 characterized in that the additive/surfactant solution is dispersed in an aqueous polymerization medium and the monomers to be polymerized are subsequently added thereto.

4. The method of Claim 2 characterized in that the additive surfactant solution is added coincident, but separate from, the monomers to be polymerized.

5. The method of Claim 2 characterized in that a portion of the additive/surfactant solution is dispersed in the aqueous polymerization medium prior to the addition of the monomers thereto and a portion of the additive/surfactant solution is added coincident with, but separate from, the monomers.

6. The method of Claim 1 characterized in that the additive is an antioxidant and the polymerization is conducted at conditions such that the antioxidant is dispersed throughout the resulting polymer dispersion as separate and distinct particles having a number average particle size of less than 0.1 μm.

7. The method of Claim 1 characterized in that the additive is a pigment, dye and colorant and the polymerization is conducted at conditions such that it becomes an integral part of the polymer-containing particles.

8. A polymer composition comprising an aqueous dispersion of (a) colloidal size polymer particles and (b) additive particles comprising a water-insoluble antioxidant characterized in that the additive particles are separate and distinct from the polymer particles and have a particle size of less than 0.1 μm.

9. The composition of Claim 8 characterized in that the antioxidant comprises at least one water-insoluble phenol or bisphenol.

10. The composition of Claim 9 wherein the antioxidant is an alkylated-*p*-cresol.

11. The composition of Claim 8 characterized in that the antioxidant is ditridecylthiopropionate.

**Patentansprüche**

1. Verfahren zur Herstellung einer Polymerzusammensetzung mit einer wäßrigen Dispersion von kolloidalen Polymerpartikeln und einem Additiv, wobei ein emulsionspolymerisierbares Monomer in einem wäßrigen Polymerisationsmedium polymerisiert wird und die Polymerisation so durchgeführt wird, daß wenigstens ein Teil der Polymerisation im Beisein eines wasserunlöslichen Additivs stattfindet, dadurch gekennzeichnet, daß das wasserunlösliche Additiv in einer wäßrigen Flüssigkeit dispergiert ist, die ganz oder zum Teil das wäßrige Polymerisationsmedium als eine inhärent dispergierbare Lösung des Additivs oder oberflächenaktiven Mittels bildet.

2. Verfahren nach Anspruch 1, dadurch gekennzeichnet, daß die Lösung des Additivs und des oberflächenaktiven Mittels 40—99 Gew.% oberflächenaktives Mittel und 1—60 Gew.% Additiv enthält, wobei sich die Gewichtsprozente auf das Gesamtgewicht von Additiv und oberflächenaktivem Mittel bezieht.

3. Verfahren nach Anspruch 2, dadurch gekennzeichnet, daß die Lösung des Additiv/ oberflächenaktiven Mittels in einem wäßrigen Polymerisationsmedium dispergiert ist und die zu polymerisierenden Monomeren anschließend hinzugefügt werden.

4. Verfahren nach Anspruch 2, dadurch gekennzeichnet, daß die Lösung aus Additiv und oberflächenaktivem Mittel gleichzeitig jedoch getrennt von den zu polymerisierenden Monomeren zugegeben wird.

5. Verfahren nach Anspruch 2, dadurch gekennzeichnet, daß ein Teil der Lösung aus Additv und oberflächenaktivem Mittel in dem wäßrigen Polymerisationsmedium dispergiert wird, bevor die Monomeren dazugegeben werden und ein Teil der Lösung aus Additiv und oberflächenaktivem Mittel gleichzeitig jedoch getrennt von den Monomeren zugegeben wird.

6. Verfahren nach Anspruch 1, dadurch gekennzeichnet, daß das Additiv ein Antioxidant ist und die Polymerisation unter solchen Bedingungen durchgeführt wird, daß das Antioxidant vollkommen in der resultierenden Polymerdispersion als separate und unterscheidbare Partikel mit einer durchschnittlichen Partikelgröße von weniger als 0,1 μm dispergiert ist.

7. Verfahren nach Anspruch 1, dadurch gekennzeichnet, daß das Additiv ein Pigment, ein Farbstoff oder ein Färbemittel ist und die Polymerisation unter solchen Bedingungen durchgeführt wird, daß es ein integraler Bestandteil der das Polymer enthaltenden Partikel wird.

8. Polymere Zusammensetzung, die ein wäßrige Lösung von (a) kolloidalen Polymerpartikeln und (b) Additivpartikeln, die ein wasserunlösliches Antioxidant umfassen, enthält, dadurch gekennzeichnet, daß die Additivpartikel von den Polymerpartikeln separat und unterscheidbar sind und eine Partikelgröße von weniger als 0,1 μm aufweisen.

9. Zusammensetzung nach Anspruch 8, dadurch gekennzeichnet, daß das Antioxidant wenigstens ein wasserunlösliches Phenol oder Bisphenol umfaßt.

10. Zusammensetzung nach Anspruch 9, in welcher das Antioxidant ein alkyliertes p-Cresol ist.

11. Zusammensetzung nach Anspruch 8, dadurch gekennzeichnet, daß das Antioxidant Ditridecylthiopropionat ist.

## 0 100 793

### Revendications

1. Procédé de préparation d'une composition de polymère comprenant une dispersion aqueuse de particules polymères de taille colloïdale et un adjuvant, dans lequel on polymérise un monomère polymérisable en émulsion dans un milieu de polymérisation aqueux, et on effectue la polymérisation de telle façon qu'au moins une partie de la polymérisation s'effectue en présence d'un adjuvant insoluble dans l'eau, le procédé de polymérisation étant caractérisé par le fait que l'adjuvant insoluble dans l'eau est dispersé dans un liquid aqueux qui forme tout ou partie du milieu aqueux de polymérisation sous forme d'une solution intrinsèquement dispersible de l'adjuvant et du tensio-actif.

2. Procédé conforme à la revendication 1, caractérisé en ce que la solution de l'adjuvant et du tensio-actif comprend de 40 à 99% en podis du tensio-actif et de 1 à 60% en poids de l'adjuvant, lesdits pourcentages en poids étant rapportés à la somme des poids de l'adjuvant et du tensio-actif.

3. Procédé conforme à la revendication 2, caractérisé en ce que la solution d'adjuvant et de tensio-actif est dispersée dans un milieu de polymérisation aqueux, auquel les monomères à polymériser sont ensuite ajoutés.

4. Procédé conforme à la revendication 2, caractérisé en ce que la solution d'adjuvant et de tensio-actif est ajoutée en même temps que les monomères à polymériser, mais de façon séparée.

5. Procédé conforme à la revendication 2, caractérisé en ce qu'une partie de la solution d'adjuvant et de tensio-actif est dispersée dans le milieu aqueux de polymérisation avant l'addition des monomères, et une partie de la solution d'adjuvant et de tensio-actif est ajoutée simultanément avec les monomères, mais de façon séparée.

6. Procédé conforme à la revendication 1, caractérisé en ce que l'adjuvant est un antioxydant et en ce que la polymérisation est effectuée dans des conditions telles que l'antioxydant est dispersé dans toute la dispersion résultante de polymère sous forme de particules séparées et distinctes présentant une taille moyenne en nombre de particule inférieure à 0,1 µm.

7. Procédé conforme à la revendication 1, caractérisé en ce que l'adjuvant est un pigment, une matière tinctoriale ou un colorant, et que la polymérisation est effectuée dans des conditions telles qu'il devienne partie intégrante des particules contenant le polymère.

8. Composition polymère comprenant une dispersion aqueuse de (a) des particules de polymère de taille colloïdale, et (b) des particules d'adjuvant comprenant un antioxydant insoluble dans l'eau, caractérisée en ce que les particules d'adjuvant sont séparées et distinctes des particules de polymère et qu'elles ont une taille de particule inférieure à 0,1 µm.

9. Composition conforme à la revendication 8, caractérisée en ce que l'antioxydant comprend au moins un phénol ou un bisphénol insoluble dans l'eau.

10. Composition conforme à la revendication 9, caractérisée en ce que l'antioxydant est un p-crésol alkylé.

11. Composition conforme à la revendication 8, caractérisée en ce que l'antioxydant est le ditridécylthiopropionate.